# FASCICULE DE BREVET EUROPEEN

(11) **EP 2 185 665 B1**
(45) Date de publication et mention de la délivrance du brevet: **29.05.2013**
(21) Numéro de dépôt: 08829367.5
(22) Date de dépôt: 29.08.2008
(51) Int. Cl.: C09K 8/03, C09K 8/04, C09K 8/32, C09K 8/36, B82B 3/00, E21B 43/25

(54) **FLUIDE DE FORAGE CONTENANT DES NANOTUBES DE CARBONE**
BOHRFLÜSSIGKEIT MIT KOHLENSTOFFNANORÖHRCHEN
DRILLING FLUID CONTAINING CARBON NANOTUBES

(30) Priorité: 07.09.2007 FR 0706274
(43) Date de publication de la demande: 19.05.2010
(73) Titulaire: ARKEMA FRANCE, 92700 Colombes (FR); Total S.A., 92400 Courbevoie (FR)
(72) Inventeur: PASSADE-BOUPAT, Nicolas, F-64000 Pau (FR); REY, Cathy, F-40300 Labatut (FR); NAEGEL, Mathieu, F-67000 Strasbourg (FR)
(74) Mandataire: Cabinet Plasseraud
(86) Numéro de dépôt international: PCT/FR2008/051546
(87) Numéro de publication internationale: WO 2009/030868

(56) Documents cités:
- EP-A- 1 634 938
- US-A- 4 735 733

## Description

La présente invention concerne un fluide viscoélastique à base aqueuse ou organique, destiné au forage dans des formations souterraines, contenant des nanotubes de carbone.

Les fluides de forage, également appelés boues de forage, sont des fluides complexes utilisés pour le forage des puits pétroliers. Ils sont injectés, généralement en continu, via le train de tiges dans le trou de forage. Leurs fonctions multiples comprennent par exemple le transport des déblais rocheux jusqu'à la surface, le maintien dans le trou de forage d'une pression hydrostatique suffisante pour prévenir l'effondrement de la formation rocheuse traversée, ou encore la lubrification et le refroidissement de la tête de forage. Il y a principalement deux familles de boues de forage : les boues à base d'huile (généralement des émulsions inverses de saumure dans une phase d'huile) et les boues à base d'eau.

Le maintien d'une pression hydrostatique suffisante pour compenser la pression latérale de la formation rocheuse traversée par le puits de forage, nécessite l'augmentation progressive de la densité du fluide de forage au fur et à mesure que le forage avance vers les zones profondes. Cette augmentation de la densité est obtenue par addition d'agents alourdissants (en anglais *weighting agents*)*,* c'est-à-dire de matériaux solides finement broyés, de densité importante et insolubles dans le fluide de forage. Plus la profondeur des puits de forage est importante, plus la quantité et/ou la densité de l'agent alourdissant utilisé augmentent, et plus le système de maintien en suspension de l'agent alourdissant dans le fluide de forage doit être efficace.

En effet, la décantation de l'agent alourdissant, par exemple lors de l'arrêt provisoire de l'injection de boue, peut avoir des conséquences désastreuses telles qu'un bouchage du puits ou encore une diminution locale de la pression hydrostatique de la colonne de fluide aboutissant à l'effondrement du puits.

Le maintien en suspension de l'agent alourdissant est typiquement assuré par des agents de viscosité, choisis classiquement parmi les argiles, organophiles ou non, et les polymères organiques solubles dans le fluide de forage. Or, au-delà d'une certaine profondeur de forage, lorsque le système de maintien en suspension de l'agent alourdissant doit être particulièrement efficace, les polymères organiques subissent une dégradation due aux températures élevées qui règnent à ces profondeurs et deviennent partiellement ou totalement inefficaces.

Le problème de la dégradation thermique des polymères organiques ne peut pas non plus être résolu par leur remplacement par des argiles. Les argiles utilisées classiquement en tant qu'agents épaississants (bentonite, montmorillonite, attapulgite, argiles organophiles) résistent, certes, à des températures nettement plus élevées que les polymères organiques, mais pour le forage à grande profondeur la quantité d'argile nécessaire pour maintenir en suspension des quantités importantes d'agent alourdissant très dense est considérable. Les boues de forage présentent alors une teneur en solides excessivement élevée qui pose des problèmes de maintien en circulation des boues dus à une viscosité excessive.

Les systèmes utilisés actuellement, qu'ils soient à base de polymères ou d'argiles, ne permettent malheureusement pas d'assurer un maintien en suspension de l'agent alourdissant au-delà d'une température d'environ 250 °C.

Dans le cadre de ses recherches visant à mettre au point de nouveaux fluides de forage, susceptibles d'être utilisés pour le forage dans des conditions de haute température et haute pression, la Demanderesse a découvert que certains nanotubes de carbone, utilisés en des quantités relativement faibles, constituent d'excellents agents épaississants qui, à la fois, présentent une excellente stabilité à chaud et permettent de maintenir en suspension des quantités importantes d'agent alourdissant très dense, tel que la baryte ou la calcite, sans pour autant conférer au fluide de forage une viscosité excessive.

L'intérêt des fluides de forage de la présente invention contenant des nanotubes de carbone réside en particulier dans leur comportement viscoplastique particulier caractérisé par un seuil d'écoulement (*yield value* ou *yield stress*) élevé associé à une viscosité relativement modérée. Le seuil d'écoulement, déterminé selon le modele de Herschel-Bulkley (Hemphill T., Campos W., et Pilehvari A. : « Yield-power Law Model More Accurately Predicts Mud Rheology », Oil & Gas Journal 91, n° 34 August 23, 1993), pages 45 - 50), est la contrainte de cisaillement (*shear stress*) en deçà de laquelle le comportement du fluide est sensiblement celui d'un solide (viscosité infinie) et au-delà de laquelle le fluide présente un comportement thixotrope.

La valeur du seuil d'écoulement, dans le modèle de Herschel-Bulkley, renseigne sur la capacité du fluide à maintenir en suspension des particules d'un solide dense dans un fluide viscoplastique au repos. Plus ce seuil est élevé, plus le fluide s'oppose à la sédimentation des particules en suspension. Les nanotubes de carbone particuliers utilisés dans la présente invention, caractérisés par un diamètre moyen relativement faible (inférieur à 30 nm) et une surface spécifique importante (supérieure à 200 m²_{/}g),confèrent aux fluides de forage, à base aqueuse ou huileuse, un seuil d'écoulement considérablement plus élevé que ne le font des polymères organiques présents en des quantités équivalentes.

Par ailleurs, ces nanotubes de carbone sont thermiquement stables à des températures allant jusqu'à 325 °C, voire au-delà.

L'utilisation des nanotubes de carbone en des teneurs très faibles, de préférence inférieures à 3 % en poids, ne présente pas les problèmes de viscosité excessive décrits ci-dessus pour les argiles épaississantes, ce qui permet un pompage plus aisé et un meilleur écoulement des fluides les contenant.

Les nanotubes de carbone décrits plus en détail ci-après remplacent ainsi avantageusement, en partie ou en totalité, les agents épaississants de type polymères organiques, argiles ou acides gras, utilisés dans des fluides de forage, en particulier dans des conditions de haute pression et haute température.

L'utilisation de nanotubes dans des fluides viscoélastiques aqueux pour l'exploration pétrolière a déjà été proposée dans la demande européenne EP 1 634 938. Ce document concerne avant tout des boues de fracturation épaissies par l'association d'un système d'agents tensioactifs, d'électrolytes et de nanotubes, ces derniers servant principalement à renforcer le pouvoir épaississant des agents tensioactifs. Ces boues de fracturation contiennent en outre des agents de soutènement, par exemple du sable, des particules de coquilles de noix, de la bauxite, des billes de verre ou des billes en céramique. Les agents de soutènement véhiculés par les fluides sont destinés à être déposés dans les formations souterraines. Il ne s'agit donc pas, comme dans la présente invention, de maintenir à tout prix en suspension des particules de densité élevée, mais au contraire de les déposer en des endroits déterminés de la formation rocheuse. Par ailleurs, ce document n'envisage à aucun moment l'utilisation de nanotubes en tant que seuls agents épaississants du fluide.

L'utilisation de nanotubes de carbone pour maintenir en suspension des particules denses, telles que des agents alourdissants, est décrite dans le brevet US 4,735,733. Les nanotubes utilisés dans ce document ont une surface spécifique inférieure à 190 m²/g. L'étude de l'influence de la surface spécifique des nanotubes sur le comportement rhéologique des fluides épaissis avait en effet montré que des nanotubes ayant une surface spécifique supérieure à cette valeur présentaient un effet épaississant insuffisant dans une huile minérale (voir Figure 4 et les commentaires relatifs à la Figure 7 à partir de la colonne 16, ligne 66). Allant à l'encontre de l'enseignement de ce document de l'état de la technique qui recommande l'utilisation de nanotubes à faible surface spécifique, la Demanderesse a au contraire constaté que des nanotubes ayant une surface spécifique supérieure ou égale à 200 m²/g conféraient aux fluides les contenant un comportement rhéologique particulièrement intéressant permettant de maintenir en suspension des agents alourdissants dans un fluide de forage au repos.

La présente invention a par conséquent pour objet un fluide viscoélastique de forage dans des formations rocheuses souterraines, comprenant
(a) une base liquide aqueuse et/ou organique,
(b) au moins un agent alourdissant, sous forme particulaire, ayant une masse volumique au moins égale à 2 g/cm³, de préférence au moins égale à 4 g/cm³, en suspension dans ladite base liquide, et
(c) des nanotubes de carbone ayant un diamètre moyen compris entre 10 et 30 nm et une surface spécifique comprise entre 200 et 250 m²/g.

La base liquide utilisée dans les fluides de forage de la présente invention peut en principe être n'importe quelle base utilisée classiquement dans des fluides de forage. Il peut s'agir par exemple d'une base aqueuse particulièrement avantageuse pour des raisons économiques et écologiques. Ces bases aqueuses contiennent de manière connue des sels hydrosolubles destinés principalement à augmenter la densité de la base. Les sels préférés comprennent des halogénures et formates de sodium, de potassium, de calcium, de zinc, de césium et des combinaisons de ceux-ci. On peut citer comme sels particulièrement préférés, le chlorure de calcium, le bromure de calcium,le formate de potassium, le formate de césium/potassium et des combinaisons de ceux-ci. Ces bases aqueuses peuvent contenir en outre de faibles fractions de solvants organiques miscibles à l'eau et/ou non miscibles à l'eau.

Dans certains cas, il peut toutefois être intéressant, voire nécessaire, de limiter la teneur en eau des fluides de forage, par exemple lorsque le puits traverse des formations rocheuses contenant une fraction importante de composants hydrosolubles ou hydrodispersibles susceptibles d'être emportés par le fluide. La base liquide est alors soit une huile ou bien une émulsion eau-dans-huile contenant de préférence au plus 50 % en poids, en particulier au plus 20 % en poids d'eau.

Lorsque la base aqueuse est une telle émulsion eau-dans-huile, également appelée émulsion inverse, le fluide viscoélastique contient en outre au moins un agent tensioactif capable de stabiliser l'émulsion.

Les agents tensioactifs capables de stabiliser une émulsion inverse ont généralement une balance hydro-lipophile (HLB) inférieure à 7. La quantité d'agent tensioactif suffisante pour stabiliser l'émulsion eau-dans-huile dépend bien entendu des proportions respectives des phases aqueuse et huileuse mais est généralement comprise entre 1% et 5 % en poids. Le ou les agents tensioactifs sont de préférence choisis parmi les agents tensioactifs non-ioniques et anioniques. Le document US2006-0046937 décrit des agents tensio-actifs susceptibles d'être utilisés dans la formulation des boues de forage de la présente invention.

L'huile utilisée dans les fluides de forage de la présente invention, c'est-à-dire l'huile constituant la base liquide ou bien l'huile formant la phase continue de l'émulsion eau-dans-huile ou la phase discontinue d'une émulsion huile-dans-eau, est de préférence une huile minérale, une huile fluorée, une huile diesel ou une huile synthétique, de préférence une huile minérale ou une huile synthétique. On préfère généralement les huiles apolaires aux huiles polaires. Une huile conventionnellement utilisée est par exemple le produit commercial EDC 99-DW commercialisé par Totale®.

On peut utiliser en tant qu'agent alourdissant en principe n'importe quel solide particulaire ayant une densité supérieure à celle de la base liquide, de préférence une masse volumique au moins égale à 2 g/cm³ et, pour les forages à grande profondeur, de préférence une masse volumique supérieure à 3 g/cm³, voire à 4 g/cm³. Ces agents alourdissants sont connus et sont choisis par exemple parmi la baryte (BaSO₄), la calcite (CaCO₃), la dolomite (CaCO₃.MgCO₃), l'hématite (Fe₂O₃), la magnétite (Fe₃O₄), l'ilménite (FeTiO₃) et la sidérite (FeCO₃). L'agent alourdissant utilisé de manière particulièrement préférée est la baryte.

La quantité d'agent alourdissant dépend essentiellement de la densité que l'on souhaite conférer au fluide de forage. Cette densité, et donc la quantité d'agent alourdissant utilisée, augmente en général progressivement avec la profondeur du puits de forage. Les fluides de forage de la présente invention sont de préférence destinés au forage à grande profondeur et ont par conséquent une densité relativement élevée, de préférence une densité globale au moins égale à 1,5, de préférence supérieure à 2,5. La limite supérieure de la teneur en agent alourdissant est déterminée essentiellement par les problèmes de viscosité qu'entraîne une teneur trop élevée en solides. De façon générale, l'agent alourdissant est utilisé dans les fluides de forage de la présente invention en une concentration comprise entre 10 et 70 % en poids. Le pourcentage d'agent alourdissant est très variable en fonction de la densité recherchée.

Les nanotubes de carbone (ou NTC) utilisées dans la présente invention sont connus. Il s'agit de structures cristallines particulières, de forme tubulaire, creuses et closes, composées d'atomes de carbone disposés régulièrement en pentagones, hexagones et/ou heptagones. Les NTC sont constitués d'un ou plusieurs feuillets de graphite enroulés. On distingue ainsi les nanotubes monoparois (*Single Wall Nanotubes* ou *SWNT*) et les nanotubes multiparois (*Multi Wall Nanotubes* ou *MWNT*) *.*

Comme indiqué ci-dessus, les NTC utilisés dans la présente invention ont un diamètre moyen allant de 10 à 30 nm, de préférence de 10 à 15 nm. Leur longueur moyenne est avantageusement comprise entre 0,1 et 10 µm et le rapport longueur moyenne/diamètre moyen est avantageusement supérieur à 10 et le plus souvent supérieur à 100.

La surface spécifique des NTC utilisés dans la présente invention, déterminée par la méthode BET par adsorption d'azote, est supérieure à 200 m²/g et de préférence comprise entre 200 m²/g et 250 m² g. Leur densité apparente non tassée est de préférence comprise entre 0,03 et 0,5 g/cm³ et en particulier entre 0,05 et 0,2 g/cm³. Cette densité apparente est le rapport d'une masse donnée de nanotubes de carbone, rapportée au volume de cette même masse mesuré après trois renversements successifs d'une éprouvette contenant lesdits nanotubes.

Les nanotubes de carbone multiparois peuvent par exemple comprendre de 5 à 15 feuillets et plus préférentiellement de 7 à 10 feuillets.

Les nanotubes de carbone à faible diamètre moyen et à surface spécifique importante utilisés dans la présente invention sont préparés selon les procédés de synthèse décrits dans la demande internationale WO2006/082325.

Des nanotubes de carbone bruts, c'est-à-dire non modifiés chimiquement, présentant les caractéristiques techniques ci-dessus sont disponibles sur le marché auprès de la société ARKEMA sous la dénomination commerciale Graphistrength^{®} C100. Ce produit est constitué de nanotubes comportant en moyenne de 5 à 15 feuillets et présentant un diamètre moyen compris entre 10 et 15 nm et une longueur moyenne de 0,1 à 10 µm.

Ces nanotubes peuvent être purifiés et/ou oxydés et/ou broyés, avant incorporation dans les fluides de forage de la présente invention.

Le broyage des NTC peut être mis en oeuvre, à chaud ou à froid, dans des appareils tels que broyeurs à boulets, à marteaux, à meules, à couteaux, jet de gaz ou tout autre système de broyage susceptible de réduire la taille du réseau enchevêtré de NTC. On préfère que cette étape de broyage soit pratiquée selon une technique de broyage par jet de gaz et en particulier dans un broyeur à jet d'air.

La purification des NTC bruts ou broyés peut être réalisée par lavage à l'aide d'une solution d'acide sulfurique, de manière à les débarrasser d'éventuelles impuretés minérales et métalliques résiduelles, provenant de leur procédé de préparation. Le rapport pondéral des NTC/acide sulfurique utilisé pour ce lavage peut être compris entre 1:2 et 1:3. L'opération de purification peut par ailleurs être effectuée à une température allant de 90 à 120°C, par exemple pendant une durée de 5 à 10 heures. Cette opération peut avantageusement être suivie d'étapes de rinçage à l'eau et de séchage des NTC purifiés.

L'oxydation des NTC bruts, broyés et/ou purifiés est avantageusement réalisée par mise en contact des nanotubes avec une solution d'hypochlorite de sodium, par exemple dans un rapport pondéral des NTC/hypochlorite de sodium allant de 1:0,1 à 1:1, de préférence à température ambiante. Cette opération d'oxydation est avantageusement suivie d'étapes de filtration et/ou de centrifugation, de lavage et de séchage des NTC oxydés.

Les NTC utilisés dans la présente invention peuvent être modifiés chimiquement par introduction de groupes fonctionnels via des liaisons covalentes. Ces groupes fonctionnels, tels que des groupes sulfate, sulfonate, carboxyle, benzènesulfonate, amine éventuellement quaternisé, ou encore des groupes obtenus par polymérisation de monomères à la surface des NTC, améliorent généralement la dispersibilité des nanotubes dans l'eau ou les solvants organiques.

Dans la présente invention, on utilisera de préférence des NTC non modifiés pour des fluides de forage à base d'huile ou à base d'émulsion inverse. Pour des fluides de forage à base d'eau, on utilisera de préférence des nanotubes fonctionnalisés par des groupements organiques ioniques.

La quantité de NTC utilisée dans les fluides de forage de la présente invention dépend, entre autres, de la quantité et de la densité de l'agent alourdissant utilisé, de la profondeur de forage, de la nature de la base liquide, et de l'absence ou de la présence d'autres agents épaississants dans le fluide de forage.

Cette quantité est de préférence comprise entre 0,1 et 3 % en poids, rapporté au poids total du fluide de forage.

Dans un mode de réalisation particulier de la présente invention, les NTC constituent le seul agent épaississant, c'est-à-dire le fluide de forage est essentiellement exempt d'autres agents épaississants connus tels que les polymères organiques, les acides gras, les argiles ou les systèmes épaississants à base d'agents tensioactifs et d'électrolytes tels que ceux décrits dans EP 1 634 938. La concentration des NTC dans le fluide de forage est alors relativement élevée, de préférence comprise entre 1 et 3 % en poids, et en particulier entre 1,5 et 3 % de NTC. En effet, des expériences ont montré qu'en l'absence d'autres agents épaississants, le seuil d'écoulement des fluides de forage augmente de manière spectaculaire au-delà d'une valeur minimale de l'ordre de 1 % en poids de NTC.

Les nanotubes de carbone sont également utiles pour renforcer l'effet de systèmes épaississants classiques, par exemple des systèmes épaississants à base de polymères. Dans un autre mode de réalisation de la présente invention, les fluides de forage de la présente invention contiennent ainsi en outre un ou plusieurs polymères organiques solubles dans la phase aqueuse et/ou dans la phase huileuse de la base liquide. La concentration de NTC est alors de préférence comprise entre 0,1 et 1 % en poids de nanotubes de carbone.

Ces polymères organiques épaississants sont choisis parmi ceux utilisés classiquement dans les fluides de forage, et l'on peut citer à titre d'exemples la gomme de guar, l'hydroxypropylguar, le carboxyméthylguar, l'hydroxypropylcellulose, l'hydroxyéthylcellulose, le xanthane, l'amidon, les polyacrylates, le poly(chlorure de diallyldiméthylammonium).

La présente invention a pour objet non seulement des fluides de forage contenant des nanotubes de carbone tels que définis ci-dessus, mais également un procédé de forage dans des formations rocheuses souterraines utilisant de tels fluides de forage.

Elle a en outre pour objet un procédé de forage dans des formations rocheuses souterraines comprenant l'injection d'un fluide de forage contenant une base liquide et/ou organique et des nanotubes de carbone ayant un diamètre moyen allant de 10 à 30 nm, la teneur en nanotubes de carbone du fluide de forage étant augmentée au fur et à mesure de l'augmentation de la profondeur de forage, de la température de forage et/ou de la pression de forage. Dans ce procédé de forage, on introduit de préférence dans le fluide de forage au moins un agent alourdissant et/ou au moins un agent épaississant autre que les nanotubes de carbone.

Grâce à l'excellente résistance thermique des NTC utilisés dans les fluides de forage de la présente invention, ces derniers sont particulièrement appropriés pour le forage à grande profondeur, c'est-à-dire dans des conditions de haute température et de haute pression.

Dans un mode de réalisation préféré des procédés de forage de la présente invention, la température de forage est par conséquent supérieure ou égale à 200 °C, en particulier supérieure à 250 °C.

Le forage à haute température et haute pression n'est toutefois qu'un mode de réalisation préféré du procédé de l'invention et les fluides de forage de la présente invention, grâce à leur seuil d'écoulement élevé associé à une viscosité relativement faible, s'avèrent également très utiles même à profondeur faible ou moyenne.

Il est ainsi possible d'utiliser les fluides de forage de la présente invention pendant toute la durée du forage en augmentant progressivement la teneur en nanotubes de carbone au fur et à mesure de l'augmentation de la profondeur de forage, de la température de forage et/ou de la pression de forage. Un tel procédé se distingue par une grande simplicité due à la possibilité de recyclage continu du fluide de forage qui peut être réutilisé après élimination des déblais et addition de quantités supplémentaires d'agent alourdissant et de nanotubes de carbone.

Dans un mode de réalisation particulier, le procédé de forage de la présente invention, le fluide de forage ne contient de préférence pas d'agent épaississant autre que les nanotubes de carbone.

Dans un autre mode de réalisation, le procédé de forage de la présente invention comprend le remplacement progressif d'un ou plusieurs agents épaississants présents dans le fluide, choisis par exemple parmi les argiles (bentonite, montmorillonite, attapulgite, argiles organophiles) ou les polymères organiques, par les nanotubes de carbone (c) au fur et à mesure de l'augmentation de la profondeur de forage, de la température de forage et/ou de la pression de forage. Il peut en effet être intéressant, principalement pour des raisons de coût de production des fluides de forage, d'utiliser en début de forage des agents épaississants connus et peu coûteux tels que les polymères organiques et/ou des argiles épaississantes, et de n'introduire les NTC qu'à partir d'une certaine profondeur lorsque la dégradation thermique des polymères organiques ou la teneur excessive en matières solides apportées par les argiles commence à poser les problèmes décrits en introduction.

Enfin l'invention a pour objet l'utilisation de nanotubes de carbone ayant un diamètre moyen compris entre 10 et 30 nm et une surface spécifique supérieure à 200 m²/g, pour le forage de formations souterraines.

L'invention sera mieux comprise à la lumière de l'exemple suivant, donné à des fins d'illustration seulement et qui n'a pas pour but de limiter la portée de l'invention telle que définie par les revendications annexées.

### EXEMPLE

On a évalué les caractéristiques rhéologiques et l'effet sur la mise en suspension de la baryte d'une boue de forage huileuse ayant une densité de 1,7 g/cm³ et contenant 56% en poids de baryte, ci-après "Boue Victoria", avec et sans adjonction de 1% en poids de nanotubes de carbone (ci-après, NTC) par rapport au poids d'huile contenue dans la boue.

On a précisément mesuré la viscosité à 50°C, sous un cisaillement de 170s⁻¹, des boues testées, qui ont été soumises à un vieillissement dynamique pendant 16h ou 40h à 180°C, puis à un test de subsidence statique à 205°C pendant 60h ou 120h.

Par "subsidence", on désigne le phénomène d'avalanche des particules d'agent alourdissant généralement observé sur les puits de forage déviés, qui entraîne une sur-concentration en agent alourdissant dans la partie basse du puits et une sous-concentration dans la partie haute du puits due à un effet de sédimentation. Le test de subsidence réalisé consiste à mesurer la densité Dl de l'échantillon de boue dans sa partie basse, après que l'échantillon ait été maintenu à une température donnée, dans une cellule inclinée à 45°, pendant un certain temps, et à en déduire l'indice de subsidence IS suivant la formule : IS = D1 / 2xDo où Do désigne la densité initiale de l'échantillon.

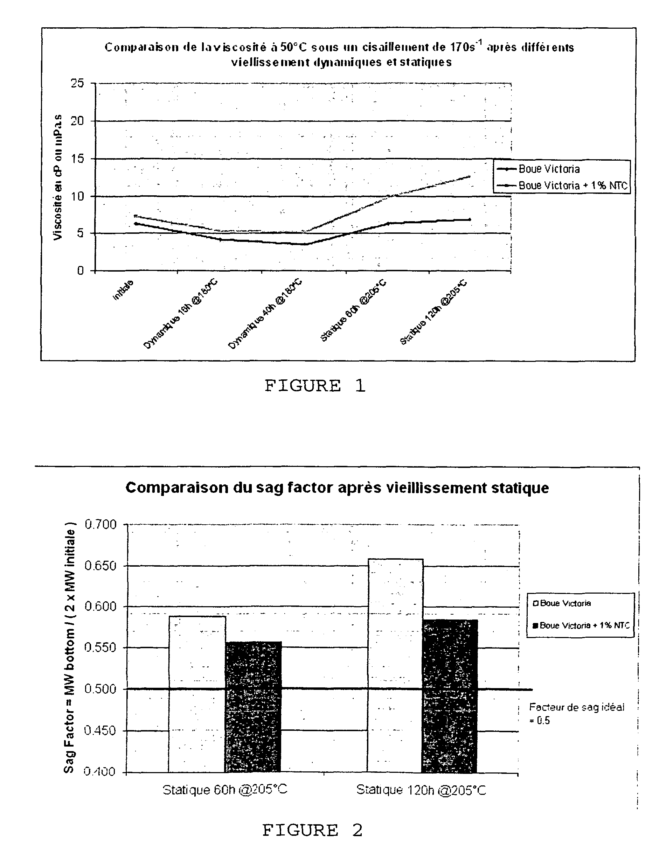

Les résultats de ce test sont illustrés sur les Figures 1 et 2 annexées.

Comme il ressort de la Figure 1, l'ajout de NTC améliore globalement la rhéologie des échantillons. La Figure 2 montre par ailleurs que l'ajout de NTC permet de mieux prévenir la subsidence de la baryte, l'indice de subsidence (ou "sag factor") étant de 0,56 au lieu de 0,59 après 60h et de 0,58 au lieu de 0,66 après 120h.

Cet exemple montre que les NTC peuvent être utilisés comme agents viscosifiants à haute température pour les boues à l'huile. On peut ainsi envisager de les employer pour maintenir en suspension les agents alourdissants conventionnellement utilisés dans les boues de forage.

## Revendications

1. Fluide viscoélastique de forage dans des formations rocheuses souterraines, comprenant
(a) une base liquide aqueuse et/ou organique,
(b) au moins un agent alourdissant, sous forme particulaire, ayant une masse volumique au moins égale à 2 g/cm³, de préférence au moins égale à 4 g/cm³, en suspension dans ladite base liquide, en une concentration comprise entre 10 et 70 % en poids, et
(c) de 0,1 à 3 % en poids de nanotubes de carbone ayant un diamètre moyen compris entre 10 et 30 nm et une surface spécifique supérieure à 200 m²/g, de préférence comprise entre 200 m²/g et 250 m²/g.

2. Fluide viscoélastique selon la revendication 1, **caractérisé par le fait que** la base liquide est une base à phase continue huileuse telle qu'une huile ou une émulsion eau-dans-huile contenant au plus 50 % en poids, de préférence au plus 20 % en poids d'eau.

3. Fluide viscoélastique selon la revendication 1 ou 2, **caractérisé par le fait que** la base liquide est une émulsion eau-dans-huile et que le fluide viscoélastique contient en outre au moins un agent tensioactif, de préférence un agent tensioactif anionique ou non ionique, en une quantité suffisante pour stabiliser l'émulsion eau-dans-huile, comprise entre 1 et 5 % en poids.

4. Fluide viscoélastique selon l'une quelconque des revendications précédentes, **caractérisé par le fait que** l'agent alourdissant est choisi parmi la baryte (BaSO₄) la calcite (CaCO₃) la dolomite (CaCO₃.MgCO₃), l'hématite (Fe₂O₃), la magnétite (Fe₃O₄), l'ilménite (FeTiO₃), la sidérite (FeCO₃), et leur mélanges, et de préférence la baryte.

5. Fluide viscoélastique selon l'une quelconque des revendications précédentes, **caractérisé par le fait que** la phase aqueuse de la base liquide contient au moins un sel hydrosoluble, choisi de préférence parmi les halogénures et formates de sodium, de potassium, de calcium, de zinc, de césium et des combinaisons de ceux-ci.

6. Fluide viscoélastique selon l'une quelconque des revendications précédentes, **caractérisé par le fait qu'**il contient en outre au moins un agent épaississant choisi parmi les polymères organiques solubles dans la phase aqueuse et/ou dans la phase huileuse de la base liquide.

7. Fluide viscoélastique selon l'une quelconque des revendications 1 à 5, **caractérisé par le fait qu'**il est exempt de polymères organiques solubles dans la phase aqueuse et/ou dans la phase huileuse de la base liquide.

8. Procédé de forage dans des formations rocheuses souterraines utilisant un fluide de forage selon l'une quelconque des revendications précédentes.

9. Procédé de forage dans des formations rocheuses souterraines selon la revendication 8, dans lequel la teneur en nanotubes de carbone du fluide de forage est augmentée au fur et à mesure de l'augmentation de la profondeur de forage, de la température de forage et/ou de la pression de forage.

10. Procédé de forage selon l'une des revendications 8 ou 9, **caractérisé par le fait qu'**il comprend le remplacement progressif d'un ou plusieurs agents épaississants présents dans le fluide, par les nanotubes de carbone au fur et à mesure de l'augmentation de la profondeur de forage, de la température de forage et/ou de la pression de forage.

11. Procédé de forage selon l'une quelconque des revendications 8 à 10, **caractérisé par le fait que** la température de forage est supérieure ou égale à 200 °C, de préférence supérieure à 250 °C.

12. Procédé de forage selon l'une quelconque des revendications 8, 9, 10 et 11, **caractérisé par le fait que** le fluide de forage ne contient pas d'agent épaississant autre que les nanotubes de carbone.

## Patentansprüche

1. Viskoelastisches Fluid zum Bohren in unterirdischen Gesteinsformationen, umfassend
(a) eine wässrige und/oder organische flüssige Base,
(b) mindestens ein teilchenförmiges Beschwerungsmittel mit einer Volumenmasse von mindestens 2 g/cm³, vorzugsweise mindestens 4 g/cm³, in Suspension in der flüssigen Base, in einer Konzentration zwischen 10 und 70 Gew.-% und
(c) 0,1 bis 3 Gew.-% Kohlenstoff-Nanoröhrchen mit einem mittleren Durchmesser zwischen 10 und 30 nm und einer spezifischen Oberfläche von mehr als 200 m²/g, vorzugsweise zwischen 200 m²/g und 250 m²/g.

2. Viskoelastisches Fluid nach Anspruch 1, **dadurch gekennzeichnet, dass** die flüssige Base eine Base mit kontinuierlicher Ölphase ist, wie z.B. ein Öl oder eine Wasser-in-Öl-Emulsion, die höchstens 50 Gew.-%, vorzugweise höchstens 20 Gew.-% Wasser enthält.

3. Viskoelastisches Fluid nach Anspruch 1 oder 2, **dadurch gekennzeichnet, dass** die flüssige Base eine Wasser-in-Öl-Emulsion ist und dass das viskoelastische Fluid weiter mindestens ein grenzflächenaktives Mittel, vorzugsweise ein anionisches oder nichtionisches grenzflächenaktives Mittel, in einer ausreichenden Menge enthält, um die Wasser-in-Öl-Emulsion zu stabilisieren, die zwischen 1 und 5 Gew.-% liegt.

4. Viskoelastisches Fluid nach einem der vorhergehenden Ansprüche, **dadurch gekennzeichnet, dass** das Beschwerungsmittel ausgewählt ist aus Baryt (BaSO₄), Calcit (CaCO₃) Dolomit (CaCO₃.MgC0₃), Hämatit (Fe₂O₃), Magnetit (Fe₃O₄), Ilmenit (FeTiO₃), Siderit (FeCO₃) und deren Gemischen, und vorzugsweise Baryt.

5. Viskoelastisches Fluid nach einem der vorhergehenden Ansprüche, **dadurch gekennzeichnet, dass** die wässrige Phase der flüssigen Base mindestens ein wasserlösliches Salz, vorzugweise ausgewählt aus Natrium-, Kalium-, Calcium-, Zink-, Cäsiumhalogeniden und -formiaten und Kombinationen davon, enthält.

6. Viskoelastisches Fluid nach einem der vorhergehenden Ansprüche, **dadurch gekennzeichnet, dass** es weiter mindestens ein Verdickungsmittel, ausgewählt aus organischen Polymeren, die in der wässrigen Phase und/oder in der Ölphase der flüssigen Base löslichen sind, enthält.

7. Viskoelastisches Fluid nach einem der Ansprüche 1 bis 5, **dadurch gekennzeichnet, dass** es frei von organischen Polymeren, die in der wässrigen Phase und/oder in der Ölphase der flüssigen Base löslichen sind, ist.

8. Verfahren zum Bohren in unterirdischen Gesteinsformationen unter Verwendung eines Bohrfluids nach einem der vorhergehenden Ansprüche.

9. Verfahren zum Bohren in unterirdischen Gesteinsformationen nach Anspruch 8, wobei der Gehalt an Kohlenstoff-Nanoröhrchen des Bohrfluids mit zunehmender Bohrtiefe, ansteigender Bohrtemperatur und/oder zunehmendem Bohrdruck nach und nach erhöht wird.

10. Verfahren zum Bohren nach einem der Ansprüche 8 oder 9, **dadurch gekennzeichnet, dass** es das zunehmende Ersetzen eines oder mehrerer im Fluid vorhandener Verdickungsmittel durch die Kohlenstoff-Nanoröhrchen mit zunehmender Bohrtiefe, ansteigender Bohrtemperatur und/oder zunehmendem Bohrdruck umfasst.

11. Verfahren zum Bohren nach einem der Ansprüche 8 bis 10, **dadurch gekennzeichnet, dass** die Bohrtemperatur oberhalb oder bei 200°C, vorzugsweise oberhalb 250°C, liegt.

12. Verfahren zum Bohren nach einem der Ansprüche 8, 9, 10 und 11, **dadurch gekennzeichnet, dass** das Bohrfluid kein anderes Verdickungsmittel als Kohlenstoff-Nanoröhrchen enthält.

## Claims

1. Viscoelastic drilling fluid for drilling in underground rock formations, comprising
(a) an aqueous and/or organic liquid base,
(b) at least one weighting agent, in particulate form, with a mass per unit volume of at least 2 g/cm³, preferably at least 4 g/cm³, in suspension in said liquid base, in a concentration of from 10 to 70 % by weight, and
(c) from 0.1 to 3 % by weight of carbon nanotubes with a mean diameter of between 10 and 30 nm and a specific surface in excess of 200 m²/g, preferably of between 200 m²/g and 250 m²/g.

2. Viscoelastic fluid according to claim 1, **characterized in that** the liquid base is a base with an oily continuous phase such as an oil or a water-in-oil emulsion containing at most 50 wt% and preferably at most 20 wt% water.

3. Viscoelastic fluid according to claim 1 or 2, **characterized in that** the liquid base is a water-in-oil emulsion and **in that** the viscoelastic fluid further contains at least one surfactant, preferably an anionic or non-ionic surfactant, in a quantity which is sufficient to stabilize the water-in-oil emulsion and comprised between 1 and 5 % by weight.

4. Viscoelastic fluid according to any of the preceding claims, **characterized in that** the weighting agent is chosen from barite (BaSO₄), calcite (CaCO₃), dolomite (CaCO₃.MgCO₃), hematite (Fe₂O₃), magnetite (Fe₃O₄), ilmenite (FeTiO₃) and siderite (FeCO₃), and mixtures thereof, preferably barite.

5. Viscoelastic fluid according to any one of the preceding claims, **characterized in that** the aqueous phase of the liquid base contains at least one water-soluble salt preferably chosen from halides and formates of sodium, of potassium, of calcium, of zinc, of cesium, and combinations thereof.

6. Viscoelastic fluid according to any one of the preceding claims, **characterized in that** it further contains at least one thickening agent chosen from organic polymers that are soluble in the aqueous phase and/or in the oily phase of the liquid base.

7. Viscoelastic fluid according to any one of claims 1 to 5, **characterized in that** it is free of organic polymers that are soluble in the aqueous phase and/or in the oily phase of the liquid base.

8. Method of drilling in underground rock formations using a drilling fluid according to any one of the preceding claims.

9. Method of drilling in underground rock formations according to claim 8, **characterized in that** the carbon nanotube content of the drilling fluid is increased as the drilling depth, the drilling temperature and/or the drilling pressure increase(s).

10. Drilling method according to any of claims 8 and 9, **characterized in that** it involves progressively replacing one or more thickening agents present in the fluid with carbon nanotubes as the drilling depth, the drilling temperature and/or the drilling pressure increase(s).

11. Drilling method according to any one of claims 8 to 10, **characterized in that** the drilling temperature is greater than or equal to 200°C, preferably greater than 250°C.

12. Drilling method according to any one of claims 8, 9, 10 and 11, **characterized in that** the drilling fluid contains no thickening agent other than the carbon nanotubes.
